(19) Europäisches Patentamt
European Patent Office
Office européen des brevets

(11) EP 4 564 964 A1

(12) **EUROPEAN PATENT APPLICATION**
published in accordance with Art. 153(4) EPC

(43) Date of publication:
04.06.2025 Bulletin 2025/23

(21) Application number: 23851552.2

(22) Date of filing: 18.07.2023

(51) International Patent Classification (IPC):
*H04W 72/04* (2023.01)

(52) Cooperative Patent Classification (CPC):
H04W 52/02; H04W 72/04; H04W 72/044;
H04W 72/23

(86) International application number:
PCT/CN2023/107917

(87) International publication number:
WO 2024/032329 (15.02.2024 Gazette 2024/07)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 08.08.2022 CN 202210947916

(71) Applicant: Huawei Technologies Co., Ltd.
Shenzhen, Guangdong 518129 (CN)

(72) Inventors:
• LI, Ruijie
Shenzhen, Guangdong 518129 (CN)

• GUAN, Lei
Shenzhen, Guangdong 518129 (CN)
• ZHOU, Guohua
Shenzhen, Guangdong 518129 (CN)
• MA, Ni
Shenzhen, Guangdong 518129 (CN)
• WU, Hengheng
Shenzhen, Guangdong 518129 (CN)
• MA, Chuan
Shenzhen, Guangdong 518129 (CN)

(74) Representative: Gill Jennings & Every LLP
The Broadgate Tower
20 Primrose Street
London EC2A 2ES (GB)

(54) **COMMUNICATION METHOD, APPARATUS AND SYSTEM**

(57) A communication method and apparatus are provided. In the communication method, a network device indicates an SSB resource configuration to a terminal device, and provides a plurality of different SSB resource configuration manners, thereby improving resource configuration flexibility, and increasing a shutdown opportunity of the network device. Therefore, energy consumption of the network device can be reduced.

FIG. 9

## Description

This application claims priority to Chinese Patent Application No. 202210947916.2, filed with the China National Intellectual Property Administration on August 8, 2022 and entitled "COMMUNICATION METHOD, APPARATUS, AND SYSTEM", which is incorporated herein by reference in its entirety.

## TECHNICAL FIELD

This application relates to the communication field, and in particular, to a communication method, apparatus, and system.

## BACKGROUND

With gradual evolution of a communication system, "low carbon" has attracted increasing attention in a communication network. Currently, when a network device does not send any data information, the network device may be shut down to reduce energy consumption. However, to enable a terminal device to identify the network device, the network device has to send some always-on (always on) common signals, for example, a synchronization signal and physical broadcast channel block (synchronization signal and physical broadcast channel (PBCH) block, SSB) and a system information block 1 (system information block 1, SIB 1) in a new radio (new radio, NR) system, and a cell-specific reference signal (cell-specific reference signal, CRS), a primary synchronization signal (primary synchronization signal, PSS), a secondary synchronization signal (secondary synchronization signal, SSS), and a SIB 1 in a long term evolution (long term evolution, LTE) system.

For example, in an NR system, to ensure that a terminal device can detect an NR carrier and access a network, a network device needs to periodically send an SSB and a SIB 1. The terminal device considers that a sending periodicity of the SSB is 20 ms (millisecond). If a maximum periodicity in which the network device sends the SSB is relatively long, the terminal device may fail to detect the NR network. In addition, the SIB 1 further includes information necessary for the terminal device to access the network. If a periodicity of sending the SIB 1 is relatively long, the terminal device needs to wait for relatively long time to access the network. This also reduces experience of the terminal device. Currently, configuration of the foregoing common signal is not flexible enough, and consequently energy consumption of the network device and the terminal device is relatively high.

Therefore, how to improve configuration flexibility of a common signal to reduce energy consumption of a network device is a problem to be urgently resolved.

## SUMMARY

This application provides a communication method, to improve configuration flexibility of a system message, to reduce energy consumption of a network device.

According to a first aspect, an embodiment of this application provides a communication method. The method may be performed by a terminal device, or may be performed by a chip or a circuit used in the terminal device. This is not limited in this application. For ease of description, an example in which the method is performed by a terminal device is used below for description.

The method may include: the terminal device receives a first SSB; the terminal device receives first information based on the first SSB, where the first information indicates a candidate time-frequency resource of a second SSB; and the terminal device determines the second SSB based on the first information.

In the method, a network device configures a time domain resource of the SSB based on the first information, thereby improving flexibility of configuring a time-frequency resource by the network device.

With reference to the first aspect, in some implementations of the first aspect, the first SSB corresponds to a first pattern, the second SSB corresponds to a second pattern, and the first pattern is different from the second pattern.

It should be understood that the first pattern may be predefined or preset. The second pattern may be predefined, may be preset, or may be indicated by the network device. This is not limited in this application. In other words, a pattern corresponding to a time-frequency resource of the first SSB is different from a pattern corresponding to a time-frequency resource of the second SSB. The pattern corresponding to the first SSB may be a pattern defined in an existing protocol, and the pattern corresponding to the second SSB may be a pattern different from the pattern defined in the existing protocol, for example, a pattern newly added based on the conventional technology.

In this manner, the first SSB and the second SSB respectively correspond to different patterns. The terminal device may determine the first SSB by using the first pattern, and may determine the second SSB based on the second pattern. In other words, the terminal device determines SSBs in a plurality of manners, thereby further improving flexibility of configuring a time-frequency resource by the network device.

With reference to the first aspect, in some implementations of the first aspect, that the first information indicates a candidate time-frequency resource of the second SSB includes: the first information indicates the second pattern, and the second pattern indicates the candidate time-frequency resource of the second SSB.

In other words, the network device indicates the second pattern to the terminal device by using the first information.

With reference to the first aspect, in some implementations of the first aspect, the second pattern belongs to a pattern set, and the pattern set includes at least one candidate pattern.

In other words, the second pattern is determined from the pattern set, or the second pattern is determined from a plurality of candidate patterns.

With reference to the first aspect, in some implementations of the first aspect, different patterns in the pattern set may correspond to different subcarrier spacings and/or bandwidths.

This manner provides diversified SSB configurations for different communication scenarios, to help improve communication efficiency.

With reference to the first aspect, in some implementations of the first aspect, the terminal device receives second information, where the second information indicates a time domain resource that is in the second pattern and that is used to send the second SSB.

It should be understood that the pattern may indicate the candidate time-frequency resource of the second SSB, and the second information may indicate a time-frequency resource that is in the second pattern and that is actually used to carry the SSB.

In this manner, the network device indicates, to the terminal device, the time domain resource for sending the second SSB, and the terminal device does not need to determine the time domain resource, thereby reducing processing complexity of the terminal device, and reducing power consumption of the terminal device.

With reference to the first aspect, in some implementations of the first aspect, the first information includes position information of a time domain resource of the second SSB.

It should be understood that content of the first information is information about a time-frequency resource of the second SSB. In other words, the network device directly indicates the time-frequency resource of the second SSB to the terminal device, thereby further reducing complexity of determining the time-frequency resource by the terminal device, and improving communication efficiency.

With reference to the first aspect, in some implementations of the first aspect, the second SSB belongs to N SSBs, the N SSBs belong to a same cell, the N SSBs belong to Q sets, Q is a positive integer greater than or equal to 1, and the first information further includes correspondences between the N SSBs and the Q sets.

With reference to the first aspect, in some implementations of the first aspect, each of the Q sets is a synchronization signal burst (SSB burst).

All SSBs sent by the network device to the terminal device belong to a same cell. These SSBs may correspond to different sets. The set may alternatively be another term such as a cluster, a group, or a subset. This is not limited in this application. In other words, in this manner, the network device may jointly send SSBs by using a plurality of SSB bursts, thereby improving SSB transmission efficiency.

With reference to the first aspect, in some implementations of the first aspect, the first SSB and the second SSB have a same frequency domain position but different time domain positions.

In other words, the SSB included in the second pattern and the first SSB are transmitted in a time division manner.

With reference to the first aspect, in some implementations of the first aspect, that the first information indicates a candidate time-frequency resource of the second SSB includes: the first information indicates an offset value, and the offset value is an offset value of the candidate time-frequency resource of the second SSB relative to the time-frequency resource of the first SSB.

With reference to the first aspect, in some implementations of the first aspect, the first information indicates an offset value, and the offset value is an offset value of a frequency domain position of the second SSB relative to a frequency domain position of the first SSB.

In this manner, the network device may indicate the offset value to the terminal device, and the terminal device determines the time-frequency resource of the second SSB based on the offset value and a reference object (the time-frequency resource of the first SSB), thereby improving diversity of indicating a time-frequency resource by the network device.

With reference to the first aspect, in some implementations of the first aspect, the first SSB occupies a first time-frequency resource, and the first time-frequency resource belongs to a candidate time-frequency resource indicated by the first pattern and belongs to the candidate time-frequency resource indicated by the second pattern.

In this manner, the candidate time-frequency resource of the second SSB may include a candidate time-frequency resource of the first SSB, so that compatibility between different patterns can be improved.

According to a second aspect, an embodiment of this application provides a communication method. The method may be performed by a network device, or may be performed by a chip or a circuit used in the network device. This is not limited in this application. For ease of description, an example in which the method is performed by a network device is used below for description. The method may include: the network device sends a first SSB; and the network device sends first information based on the first SSB, where the first information indicates a candidate time-frequency resource of a second SSB.

With reference to the second aspect, in some implementations of the second aspect, the first SSB corresponds to a first pattern, the second SSB corresponds to a second pattern, and the first pattern is different from the second pattern.

With reference to the second aspect, in some implementations of the second aspect, that the first information indicates a candidate time-frequency resource of the second SSB includes: the first information indicates the second pattern, and the second pattern indicates the candidate time-frequency resource of the second SSB.

With reference to the second aspect, in some implementations of the second aspect, the second pattern belongs to a pattern set, and the pattern set includes at least one candidate pattern.

With reference to the second aspect, in some implementations of the second aspect, the network device sends second information, where the second information indicates a time domain resource that is in the second pattern and that is used to receive the second SSB.

With reference to the second aspect, in some implementations of the second aspect, the first information includes position information of a time domain resource of the second SSB.

With reference to the second aspect, in some implementations of the second aspect, the second SSB belongs to N SSBs, the N SSBs belong to a same cell, the N SSBs belong to Q sets, Q is a positive integer greater than or equal to 1, and the first information further includes correspondences between the N SSBs and the Q sets.

With reference to the second aspect, in some implementations of the second aspect, each of the Q sets is a synchronization signal burst (SSB burst).

With reference to the second aspect, in some implementations of the second aspect, the first SSB and the second SSB have a same frequency domain position but different time domain positions.

With reference to the second aspect, in some implementations of the second aspect, that the first information indicates a candidate time-frequency resource of the second SSB includes: the first information indicates an offset value, and the offset value is an offset value of the candidate time-frequency resource of the second SSB relative to a time-frequency resource of the first SSB.

With reference to the second aspect, in some implementations of the second aspect, the first information indicates an offset value, and the offset value is an offset value of a frequency domain position of the second SSB relative to a frequency domain position of the first SSB.

With reference to the second aspect, in some implementations of the second aspect, the first SSB occupies a first time-frequency resource, and the first time-frequency resource belongs to a candidate time-frequency resource indicated by the first pattern and belongs to the candidate time-frequency resource indicated by the second pattern.

It should be understood that the second aspect is a method that is on a network device side and that corresponds to the first aspect. Related explanations, supplements, and descriptions of beneficial effects of the first aspect are also applicable to the second aspect. Details are not described herein again.

According to a third aspect, an embodiment of this application provides a communication method. The method may be performed by a terminal device, or may be performed by a chip or a circuit used in the terminal device. This is not limited in this application. For ease of description, an example in which the method is performed by a terminal device is used below for description. The method may include: the terminal device determines N SSBs, where N is a positive integer greater than or equal to 2, the N SSBs include a first SSB and a second SSB, the first SSB is an SSB at an earliest time domain position in the N SSBs, the second SSB is an SSB at a latest time domain position in the N SSBs, a time domain interval between the first SSB and the second SSB is greater than half of a length of a first frame, the first frame is a frame that carries the N SSBs, the N SSBs belong to P sets, P is a positive integer greater than or equal to 2, the P sets are in one-to-one correspondence with P cells, and the P cells are different from each other; and the terminal device receives at least one of the N SSBs.

In the method, different cells are obtained through division for a plurality of SSBs sent by a network device to the terminal device, so that a coverage area of time-frequency resources occupied by the SSBs is expanded, for example, the time-frequency resources occupied by the SSBs are distributed in an entire frame, and an opportunity of aligning system information in different communication modes on time-frequency resources is increased, thereby increasing a shutdown probability of the network device. Therefore, power consumption of the network device and the terminal device can be reduced. In addition, terminal devices of different versions can receive and identify the SSBs, thereby reducing user costs.

With reference to the third aspect, in some implementations of the third aspect, when P is 4, the P sets include a first set, a second set, a third set, and a fourth set; indexes of SSBs included in the first set and the third set are 2, O is 2, and M is 1; and SSB indexes corresponding to SSBs included in the second set and the fourth set are 4, O is 5, and M is 1, where O and M are used to determine candidate positions of SIBs 1 in the SSBs.

In other words, in this manner, the network device sends the SSBs in a time division manner. It should be understood that the values of O and M are merely used as an example rather than a limitation.

With reference to the third aspect, in some implementations of the third aspect, the N SSBs include a third SSB and a fourth SSB, the third SSB belongs to a first cell, the fourth SSB belongs to a second cell, and the third SSB and the fourth SSB occupy a same time domain resource but different frequency domain resources.

In other words, in this manner, the network device sends, to the terminal device in a frequency division manner, SSBs that belong to different cells.

According to a fourth aspect, an embodiment of this application provides a communication method. The method may be performed by a network device, or may be performed by a chip or a circuit used in the network device. This is not limited in this application. For ease of description, an example in which the method is performed by a network device is used below for description. The method may include: the network device determines N SSBs, where the N SSBs include a first SSB and a second SSB, the first SSB is an SSB at an earliest time domain position in the N SSBs, the second SSB is a set at a latest time domain position in the N SSBs, a time domain interval between the first SSB and the second SSB is greater than half of a length of a first frame, the first frame is a frame that carries the N SSBs, the N SSBs belong to P sets, P is a positive integer greater than or equal to 2, the P sets are in one-to-one correspondence with P cells, and the P cells are different from each other; and the network device sends the N SSBs.

With reference to the fourth aspect, in some implementations of the fourth aspect, when P is 4, the P sets include a first set, a second set, a third set, and a fourth set; SSB indexes corresponding to SSBs included in the first set and the third set are 2, O is 2, and M is 1; and indexes of SSBs included in the second set and the fourth set are 4, O is 5, and M is 1, where O and M are used to determine candidate positions of SIBs 1 in the SSBs.

With reference to the fourth aspect, in some implementations of the fourth aspect, the SSBs include a third SSB and a fourth SSB, the third SSB belongs to a first cell, the fourth SSB belongs to a second cell, and the third SSB and the fourth SSB occupy a same time domain resource but different frequency domain resources.

It should be understood that the fourth aspect is a method that is on a network device side and that corresponds to the third aspect. Related explanations, supplements, and descriptions of beneficial effects of the third aspect are also applicable to the fourth aspect. Details are not described herein again.

According to a fifth aspect, an embodiment of this application provides a communication apparatus. The apparatus includes a processing module and a transceiver module. The transceiver module may be configured to receive a first SSB. The transceiver module is further configured to receive first information based on the first SSB, where the first information indicates a candidate time-frequency resource of a second SSB. The processing module is configured to determine the second SSB based on the first information.

According to a sixth aspect, an embodiment of this application provides a communication apparatus. The communication apparatus includes a transceiver module and a processing module. The transceiver module is configured to send a first SSB. The transceiver module is further configured to send first information.

According to a seventh aspect, an embodiment of this application provides a communication apparatus. The communication apparatus includes a transceiver module and a processing module. The processing module is configured to determine N SSBs, where N is a positive integer greater than or equal to 2, the N SSBs include a first SSB and a second SSB, the first SSB is an SSB at an earliest time domain position in the N SSBs, the second SSB is an SSB at a latest time domain position in the N SSBs, a time domain interval between the first SSB and the second SSB is greater than half of a length of a first frame, the first frame is a frame that carries the N SSBs, the N SSBs belong to P sets, P is a positive integer greater than or equal to 2, the P sets are in one-to-one correspondence with P cells, and the P cells are different from each other. The transceiver module is configured to receive at least one of the N SSBs.

According to an eighth aspect, an embodiment of this application provides a communication apparatus. The communication apparatus includes a transceiver module and a processing module. The processing module is configured to determine N SSBs, where the N SSBs include a first SSB and a second SSB, the first SSB is an SSB at an earliest time domain position in the N SSBs, the second SSB is a set at a last time domain position in the N SSBs, a time domain interval between the first SSB and the second SSB is greater than half of a length of a first frame, the first frame is a frame that carries the N SSBs, the N SSBs belong to P sets, P is a positive integer greater than or equal to 2, the P sets are in one-to-one correspondence with P cells, and the P cells are different from each other. The transceiver module is configured to send the N SSBs.

It should be understood that the fifth aspect, the sixth aspect, the seventh aspect, and the eighth aspect are implementations that are on an apparatus side and that respectively correspond to the first aspect, the second aspect, the third aspect, and the fourth aspect. Related explanations, supplements, possible implementations, and descriptions of beneficial effects of the first aspect, the second aspect, the third aspect, and the fourth aspect are also respectively applicable to the fifth aspect, the sixth aspect, the seventh aspect, and the eighth aspect. Details are not described herein again.

According to a ninth aspect, an embodiment of this application provides a communication apparatus, including an interface circuit and a processor. The interface circuit is configured to implement the function of the transceiver module in the fifth aspect or the seventh aspect, and the processor is configured to implement the function of the processing module in the fifth aspect or the seventh aspect.

According to a tenth aspect, an embodiment of this application provides a communication apparatus, including an interface circuit and a processor. The interface circuit is configured to implement the function of the transceiver module in the sixth aspect or the eighth aspect, and the processor is configured to implement the function of the processing module in the sixth aspect or the eighth aspect.

According to an eleventh aspect, an embodiment of this application provides a computer-readable medium. The computer-readable medium stores program code executed by a terminal device, and the program code includes instructions used to perform the method in the first aspect or the third aspect, any possible manner of the first aspect or the third aspect, or all possible manners of the first aspect or the third aspect.

According to a twelfth aspect, an embodiment of this application provides a computer-readable medium. The computer-readable medium stores program code executed by a network device, and the program code includes instructions used to perform the method in the second aspect or the fourth aspect, any possible manner of the second aspect or the fourth aspect, or all possible manners of the second aspect or the fourth aspect.

According to a thirteenth aspect, a computer program product storing computer-readable instructions is provided. When the computer-readable instructions are run on a computer, the computer is enabled to perform the method in the first aspect or the third aspect, any possible manner of the first aspect or the third aspect, or all possible manners of the first aspect or the third aspect.

According to a fourteenth aspect, a computer program product storing computer-readable instructions is provided. When the computer-readable instructions are run on a computer, the computer is enabled to perform the method in the second aspect or the fourth aspect, any possible manner of the second aspect or the fourth aspect, or all possible manners of the second aspect or the fourth aspect.

According to a fifteenth aspect, a communication system is provided. The communication system includes an apparatus that has a function of implementing the method and various possible designs in the first aspect or the third aspect, any possible manner of the first aspect or the third aspect, or all possible manners of the first aspect or the third aspect, and an apparatus that has a function of implementing the method and various possible designs in the second aspect or the fourth aspect, any possible manner of the second aspect or the fourth aspect, or all possible manners of the second aspect or the fourth aspect.

According to a sixteenth aspect, a processor is provided. The processor is configured to be coupled to a memory, and is configured to perform the method in the first aspect or the third aspect, any possible manner of the first aspect or the third aspect, or all possible manners of the first aspect or the third aspect.

According to a seventeenth aspect, a processor is provided. The processor is configured to be coupled to a memory, and is configured to perform the method in the second aspect or the fourth aspect, any possible manner of the second aspect or the fourth aspect, or all possible manners of the second aspect or the fourth aspect.

According to an eighteenth aspect, a chip system is provided. The chip system includes a processor, and may further include a memory. The processor is configured to execute computer programs or instructions stored in the memory, to enable the chip system to implement the method in any one of the first aspect to the fourth aspect and any possible implementation of any one of the first aspect to the fourth aspect. The chip system may include a chip, or may include a chip and another discrete component.

According to a nineteenth aspect, a computer program product storing computer-readable instructions is provided. When the computer-readable instructions are run on a computer, the computer is enabled to perform the method in the first aspect or the third aspect, any possible manner of the first aspect or the third aspect, or all possible implementations of the first aspect or the third aspect.

According to a twentieth aspect, a computer program product storing computer-readable instructions is provided. When the computer-readable instructions are run on a computer, the computer is enabled to perform the method in the second aspect or the fourth aspect, any possible manner of the second aspect or the fourth aspect, or all possible implementations of the second aspect or the fourth aspect.

According to a twenty-first aspect, a communication system is provided. The communication system includes at least one communication apparatus according to the fifth aspect and/or at least one communication apparatus according to the sixth aspect. The communication system is configured to implement the method in the first aspect or the second aspect, any possible manner of the first aspect or the second aspect, or all possible implementations of the first aspect or the second aspect.

According to a twenty-second aspect, a communication system is provided. The communication system includes at least one communication apparatus according to the seventh aspect and at least one communication apparatus according to the eighth aspect. The communication system is configured to implement the method in the third aspect or the fourth aspect, any possible manner of the third aspect or the fourth aspect, or all possible implementations of the third aspect or the fourth aspect.

According to a twenty-third aspect, a communication method is provided. The communication method includes: a network device sends a first SSB to a terminal device; the terminal receives the first SSB, and receives first information based on the first SSB, where the first information indicates a candidate time-frequency resource of a second SSB; and the terminal device determines the second SSB based on the first information.

BRIEF DESCRIPTION OF DRAWINGS

FIG. 1 shows a system architecture to which embodiments of this application are applicable;
FIG. 2 is a diagram of a structure of an SSB;
FIG. 3 is a diagram of an SSB pattern;
FIG. 4 is a diagram of another SSB pattern;
FIG. 5 is a diagram of a relationship between an SSB and a CORESET 0;
FIG. 6 is a diagram of a frame structure;
FIG. 7 is a diagram of a correspondence between a subframe and a symbol;
FIG. 8 is a diagram of a correspondence between a subframe, a MIB, and a symbol;
FIG. 9 is a diagram of a communication method according to an embodiment of this application;
FIG. 10 is a diagram of a correspondence between a subframe, an SSB, and a symbol;
FIG. 11 is a diagram of a communication resource according to an embodiment of this application;
FIG. 12 is a diagram of another communication method according to an embodiment of this application;
FIG. 13 is a diagram of another communication resource according to an embodiment of this application;
FIG. 14 is a diagram of beam scanning according to an embodiment of this application;
FIG. 15 is a block diagram of a communication apparatus according to an embodiment of this application; and
FIG. 16 is a block diagram of another communication apparatus according to an embodiment of this application.

**DESCRIPTION OF EMBODIMENTS**

The following describes technical solutions in embodiments of this application with reference to accompanying drawings.

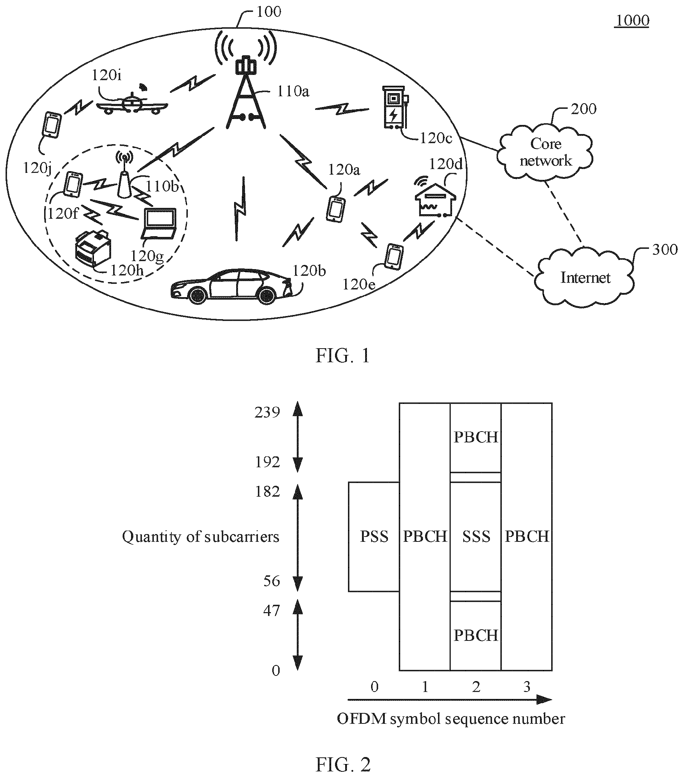

FIG. 1 is a diagram of an architecture of a communication system 1000 to which embodiments of this application are applied. As shown in FIG. 1, the communication system includes a radio access network 100 and a core network 200. Optionally, the communication system 1000 may further include an internet 300. The radio access network 100 may include at least one radio access network device (for example, 110a and 110b in FIG. 1), and may further include at least one terminal (for example, 120a to 120j in FIG. 1). The terminal is connected to the radio access network device in a wireless manner, and the radio access network device is connected to the core network in a wireless or wired manner. A core network device and the radio access network device may be independent different physical devices, functions of the core network device and logical functions of the radio access network device may be integrated into a same physical device, or some functions of the core network device and some functions of the radio access network device may be integrated into one physical device. A wired or wireless manner may be used for connection between terminals and between radio access network devices. FIG. 1 is only a diagram. The communication system may further include other network devices, for example, may further include a wireless relay device and a wireless backhaul device, which are not shown in FIG. 1.
The radio access network device may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation base station in a 6th generation (6th generation, 6G) mobile communication system, a base station in a future mobile communication system, an access node in a WiFi system, or the like; or may be a module or a unit that completes some functions of a base station, for example, may be a central unit (central unit, CU), or may be a distributed unit (distributed unit, DU). The CU herein completes functions of a radio resource control protocol and a packet data convergence protocol (packet data convergence protocol, PDCP) of the base station, and may further complete functions of a service data adaptation protocol (service data adaptation protocol, SDAP). The DU completes functions of a radio link control layer and a medium access control (medium access control, MAC) layer of the base station, and may further complete some or all functions of a physical layer. For specific descriptions of the foregoing protocol layers, refer to related technical specifications of the 3rd generation partnership project (3rd generation partnership project, 3GPP). The radio access network device may be a macro base station (for example, 110a in FIG. 1), may be a micro base station or an indoor station (for example, 110b in FIG. 1), or may be a relay node, a donor node, or the like. A specific technology and a specific device form that are used by the radio access network device are not limited in embodiments of this application. For ease of description, the following provides descriptions by using an example in which a base station is used as the radio access network device.
The terminal may also be referred to as a terminal device, user equipment (user equipment, UE), a mobile station, a mobile terminal, or the like. The terminal may be widely used in various scenarios, for example, device-to-device (device-to-device, D2D), vehicle-to-everything (vehicle-to-everything, V2X) communication, machine type communication (machine type communication, MTC), an internet of things (internet of things, IOT), virtual reality, augmented reality, industrial control, self-driving, telemedicine, a smart grid, smart furniture, a smart office, a smart wearable, smart transportation, and a smart city. The terminal may be a mobile phone, a tablet computer, a computer with a wireless transceiver function, a wearable device, a vehicle, an uncrewed aerial vehicle, a helicopter, an airplane, a ship, a robot, a robot arm, a smart home device, or the like. A specific technology and a specific device form that are used by the terminal are not limited in embodiments of this application.

The base station and the terminal may be fixed or movable. The base station and the terminal may be deployed on land, including an indoor or outdoor device, a handheld device, or a vehiclemounted device, may be deployed on water, or may be deployed on an airplane, a balloon, or an artificial satellite. Application scenarios of the base station and the terminal are not limited in embodiments of this application.

Roles of the base station and the terminal may be relative. For example, a helicopter or an uncrewed aerial vehicle 120i in FIG. 1 may be configured as a mobile base station. For a terminal 120j accessing the radio access network 100 through 120i, the terminal 120i is a base station. However, for the base station 110a, 120i is a terminal. In other words, 110a communicates with 120i by using a radio air interface protocol. Certainly, 110a may alternatively communicate with 120i by using an interface protocol between base stations. In this case, for 110a, 120i is also a base station. Therefore, both the base station and the terminal may be collectively referred to as communication apparatuses, 110a and 110b in FIG. 1 each may be referred to as a communication apparatus having a function of a base station, and 120a to 120j in FIG. 1 each may be referred to as a communication apparatus having a function of a terminal.

Communication between the base station and the terminal, between base stations, or between terminals may be performed by using a licensed spectrum, may be performed by using an unlicensed spectrum, or may be performed by using both the licensed spectrum and the unlicensed spectrum; or may be performed by using a spectrum below 6 gigahertz (gigahertz, GHz), may be performed by using a spectrum above 6 GHz, or may be performed by using both the spectrum below 6 GHz and the spectrum above 6 GHz. A spectrum resource used for wireless communication is not limited in embodiments of this application.

In embodiments of this application, a function of the base station may alternatively be performed by a module (for example, a chip) in the base station, or may be performed by a control subsystem including the function of the base station. The control subsystem including the function of the base station herein may be a control center in the foregoing application scenarios, such as a smart grid, industrial control, smart transportation, and a smart city. A function of the terminal may alternatively be performed by a module (for example, a chip or a modem) in the terminal, or may be performed by an apparatus including the function of the terminal.

The technical solutions provided in embodiments of this application may be applied to wireless communication between communication devices. The wireless communication between communication devices may include wireless communication between a network device and a terminal, wireless communication between network devices, and wireless communication between terminal devices. In embodiments of this application, the term "wireless communication" may also be briefly referred to as "communication", and the term "communication" may also be described as "data transmission", "information transmission", or "transmission".

It may be understood that, in embodiments of this application, a physical uplink shared channel (physical downlink shared channel, PDSCH), a physical downlink control channel (physical downlink control channel, PDCCH), and a physical uplink shared channel (physical uplink shared channel, PUSCH) are merely respectively used as examples of a downlink data channel, a downlink control channel, and an uplink data channel. In different systems and different scenarios, a data channel and a control channel may have different names. This is not limited in embodiments of this application.

For ease of understanding the solutions in embodiments of this application, related concepts are explained.

1. Common signal

The common signal may also be referred to as common information or non-dedicated information, and may be understood as information sent by a communication device to a plurality of communication devices. For example, in the communication system shown in FIG. 1, the common information may be understood as information sent by a network device to a plurality of terminal devices or a terminal device group in a cell, may be understood as information not specifically sent by a network device to a terminal device or a terminal device group in a cell, or may be understood as information that can be jointly used by a plurality of terminal devices or a terminal device group in a cell. For example, the common information may be system information (system information block, SIB) or an SSB. The SSB (also referred to as a synchronization signal block) may be used by a terminal device to access a cell, for example, perform cell search, beam measurement, beam selection, and beam recovery. In 5G, the SSB includes a synchronization signal and a broadcast signal. Specifically, the synchronization signal includes a PSS and an SSS. The broadcast signal includes PBCH data (physical broadcast channel data, PBCH data) and a PBCH demodulation reference signal (demodulation reference signal, DMRS). Specifically, FIG. 2 is an example of a time-frequency domain structure of an SSB. The SSB occupies four orthogonal frequency division multiplexing (orthogonal frequency division multiplexing OFDM) symbols in time domain, and occupies 20 RBs, namely, 240 subcarriers (subcarrier, SC), in frequency domain. The SSB in NR mainly has two functions: (1) cell synchronization and obtaining of a master system message (master information block, MIB), where the MIB may be carried through a PBCH; and (2) wide beam training on a base station side.

2. Cell synchronization: A PSS and an SSS carry a physical cell identifier (physical cell identifier, PCI), and UE detects the PSS and the SSS to obtain the PCI. In NR, a PBCH of an SSB carries an SSB index (index), and each SSB index corresponds to a sending position of one SSB. A terminal may detect the SSB index and a moment to complete downlink timing synchronization.

In LTE, 504 different PCIs are defined in total, and each PCI corresponds to one specific downlink reference signal sequence. All PCIs are divided into 168 groups (corresponding to a variable $N_{ID}^1$, ranging from 0 to 167), and each group includes three cell IDs (corresponding to a variable $N_{ID}^2$, ranging from 0 to 2):

$$N_{ID}^{cell} = 3N_{ID}^1 + N_{ID}^2$$

FIG. 2 shows time domain positions of a PSS and an SSS in frequency division duplex (frequency division duplex, FDD) and time division duplex (time division duplex, TDD) systems. For TDD and FDD, the two types of synchronization signals have a same structure but different time domain positions in frames. As shown in (a) in FIG. 2 and (b) in FIG. 2, for FDD, the PSS is sent on the last OFDM symbols of the 1st slots of subframes 0 and 5; and the SSS is sent in the same slots of the same subframes as the PSS, but the SSS is located on the penultimate OFDM symbols, in other words, the SSS is sent one OFDM symbol earlier than the PSS. For TDD, as shown in (b) in FIG. 2, the PSS is sent on the 3rd OFDM symbols of subframes 1 and 6, and the SSS is sent on the last OFDM symbols of subframes 0 and 5, in other words, the SSS is sent three symbols earlier than the PSS.

3. Beam training: Beam training is usually also referred to as beam alignment or beam selection. In beam training, a channel is detected by using a simulated transmit beam and a simulated receive beam, to search for a transmit and receive beam combination with maximum received signal energy, namely, a beam pair most suitable for transmission of the channel, thereby avoiding direct estimation of an air interface channel. For example, one SSB pattern (pattern) includes a plurality of SSB indexes, and different SSB indexes may correspond to different transmit beams of a base station. UE may detect SSBs, and select a best SSB index, for example, an SSB index 1, to complete wide beam training. In addition, the UE may alternatively use a plurality of receive beams to receive one SSB index 1 by using different receive beams, and select a best receive beam, for example, a receive beam 2, to complete receive beam training on a UE side. A function of the wide beam of the base station includes: (1) the UE sends, through the receive beam 2, a SIB 1/Paging at a position corresponding to the SSB index 1, to improve coverage of the SIB 1/Paging; (2) the UE sends a physical random access channel (physical random access channel, PRACH) at the position corresponding to the SSB index 1, and the base station may receive the PRACH through a same wide beam used by the base station to send the SSB index 1, to improve a receiving success probability of the PRACH; and (3) after the UE completes initial access and establishes an RRC connection, the base station may perform fine beam training based on the wide beam (the receive beam 2), in other words, perform training only on fine beams in a range of the receive beam 2, to reduce overheads of fine beam training.

4. SSB detection: A terminal device needs to blindly detect a position of an SSB. However, because a cell bandwidth in NR is very wide, if the terminal device attempts to detect an SSB at each frequency, an access speed of the terminal device is very slow. Therefore, a synchronization raster (synchronization raster) is defined in an NR protocol, and is used to determine a frequency position of a candidate SSB. In other words, the terminal device only needs to attempt to detect an SSB at a frequency domain position determined by the synchronization raster, thereby improving a speed of detecting an SSB by the terminal device. An interval between two adjacent frequency domain positions determined by the synchronization raster has different values, namely, 1200 kHz, 1.44 MHz, and 17.28 MHz respectively, in different bands. For example, as shown in Table 1, the terminal device only needs to detect an SSB at a frequency determined by $SS_{REF}$, and does not need to perform detection at all frequencies. In the following table, a calculated result of $SS_{REF}$ indicates a center frequency of an SSB. With reference to the description that the SSB includes four consecutive symbols in time domain and occupies 20 RBs in frequency domain, the calculated result of $SS_{REF}$ is a position at which a resource element (resource element, RE) is equal to 0 in the 10th RB in the SSB.

In addition, in an initial access process, the terminal device assumes that a periodicity in which a network device sends an SSB is 20 ms. In other words, if the terminal device does not detect an SSB at $SS_{REF}$ after waiting for 20 ms, the terminal device may continue detection in another synchronization raster.

Table 1 Frequency raster parameters (GSCN parameters for the global frequency raster)

| Frequency range (MHz) | $SS_{REF}$ | GSCN | GSCN range |
|---|---|---|---|
| 0-3000 | N*1200 kHZ+M*50 kHz N=1:2499, M∈{1, 3, 5} | 3N+(M-3)/2 | 2-7489 |
| 3000-24250 | 3000 MHz+N*1.44 MHz N=0:14756 | 7499+N | 7499-22255 |
| 24250-100000 | 24250.08 MHz+N*17.28 MHz N=0:4383 | 22256+N | 22256-26639 |
| Note: Only support a default value of an operating band of an SCS spacing channel raster in being M=3 | | | |

In Table 1, $SS_{REF}$ represents the center frequency of the SSB, and GSCN represents a global synchronization channel number (Global Synchronization Channel Number).

5. Time-frequency resource: The time-frequency resource includes a time domain resource and a frequency domain resource. A frequency domain position of an SSB may be determined based on the foregoing synchronization raster, and a time domain position of the SSB may be determined based on an SSB pattern. For example, one SSB pattern represents time domain positions of a group of consecutive SSBs in a half-frame (Half-Frame). Currently, five SSB patterns are defined in a licensed spectrum (an unshared spectrum). Each pattern includes time-frequency resource positions of SSBs, a quantity of SSBs, an SSB subcarrier spacing, and the like. Each SSB pattern has a subcarrier spacing (subcarrier spacing, SCS) to which the SSB pattern is applicable. However, one or two SSB patterns are usually available for each bandwidth (band). The following briefly describes two predefined SSB patterns:

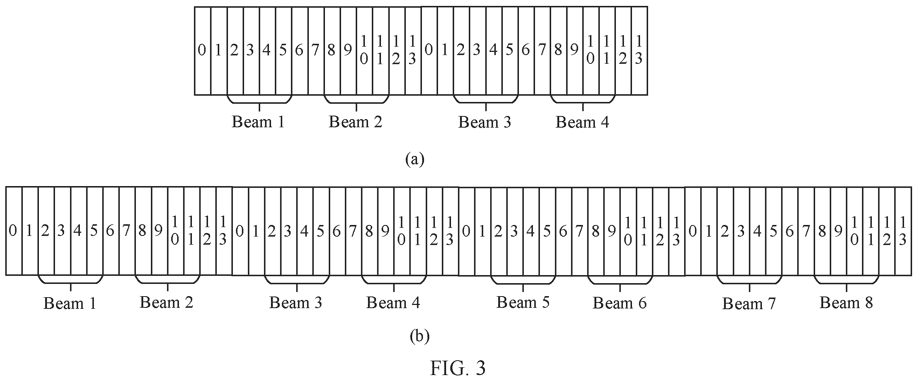

SSB pattern A: An SSB subcarrier spacing is 15 kHz. As shown in (a) in FIG. 3, when a carrier is less than or equal to 3 GHz, four beams (beam) are included. As shown in (b) in FIG. 3, when a carrier is greater than 3 GHz (belonging to an FR 1), there are eight beams.

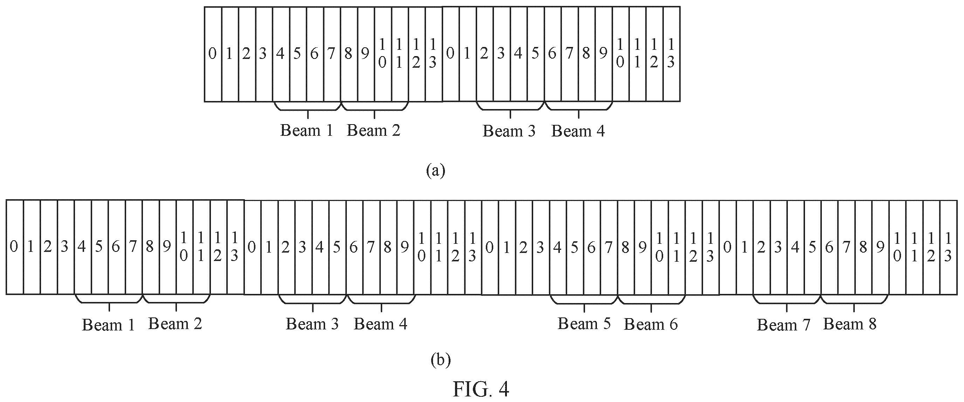

SSB pattern B: An SSB subcarrier spacing is 30 kHz. As shown in (a) in FIG. 4, when a carrier is less than or equal to 3 GHz, four beams are included. As shown in (b) in FIG. 4, when a carrier is greater than 3 GHz (belonging to a frequency range 1, FR 1), there are eight beams.

Other cases are not described herein. A maximum quantity of SSBs is determined in an SSB pattern specified in a protocol, but does not represent a quantity of actually sent SSBs. For example, for the SSB pattern A, when a carrier is less than or equal to 3 GHz, there are a maximum of four SSBs in a half-frame, respectively corresponding to SSB indexes 0, 1, 2, and 3. However, a network device may send only three SSBs. For example, the network device sends only SSBs whose SSB indexes are 0, 2, and 3. A specific to-be-sent SSB/specific to-be-sent SSBs may be indicated in a SIB 1 (by using a parameter ssb-PositionsInBurst) by using a bitmap (bitmap). Positions of SSB indexes are in one-to-one correspondence with positions provided in a pattern. For example, in (a) in FIG. 3, from front to back, the positions provided in the pattern respectively correspond to the SSB indexes 0, 1, 2, and 3. To be specific, when the network device does not send the index 1, it indicates that no SSB is sent at a position of the 2nd SSB in (a) in FIG. 3. Further, all SSBs in a periodicity may be collectively referred to as an SSB set (burst).

6. SIB 1: The SIB 1 is carried on a physical downlink data channel (physical downlink shared channel, PDSCH). A time-frequency position and a transmission parameter of the PDSCH that carries the SIB 1 are indicated by downlink control information (downlink control information, DCI), and the DCI corresponding to the SIB 1 is jointly determined by using controlResourceSetZero (CORESET 0) and searchSpaceZero (common search space, CSS 0). A MIB in an SSB includes 4 bits indicating the CORESET 0 and 4 bits indicating the CSS 0, respectively indicating a frequency domain position and a time domain position of the DCI for receiving and scheduling the SIB 1. Details are as follows:

(1) Determine the CORESET 0: After detecting the SSB, a terminal device obtains 4-bit (bit) signaling controlResourceSetZero from the MIB, where the signaling indicates SSBMuxPattern, Offset, $N^{CORESET}_{RB}$, and $N^{CORESET}_{sym}$; and reads other 4-bit signaling $k_{SSB}$ from the MIB.

SSBMuxPattern indicates a multiplexing pattern (Multiplexing Pattern, denoted as MuxPattern) of the SSB and the CSS 0 and is used to subsequently determine the CSS 0. For example, the multiplexing pattern is MuxPattern #1, MuxPattern #2, or MuxPattern #3.

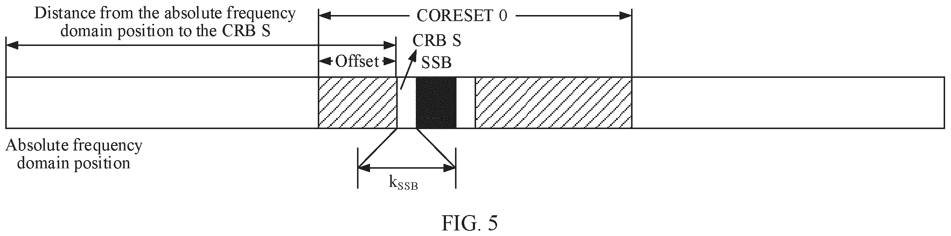

Offset and $k_{SSB}$ are used to determine a position of a start RB of the CORESET 0. $k_{SSB}$ represents a distance (in a unit of a quantity of subcarriers) between a start subcarrier of the SSB and a reference RB (referred to as a CRB S in FIG. 5). Offset represents a distance (in a unit of RB) from the reference RB to the start RB of the CORESET 0. $N^{CORESET}_{sym}$ indicates a quantity of symbols occupied by the CORESET #0 in time domain, in other words, indicates a time domain length (in a unit of symbol) of the CORESET #0. $N^{CORESET}_{RB}$ is used to determine a frequency domain width of the CORESET #0.

(2) Determine the CSS 0: The CSS #0 corresponds to a plurality of time domain positions, and one SSB index in NR corresponds to one time domain position of the CSS #0. Specifically, NR supports three multiplexing patterns of the SSB and the CSS #0. In each pattern, a method for determining a time domain position that is of the CSS #0 and that corresponds to an SSB index is different. Herein, a multiplexing pattern 1 is used as an example for description, and other patterns are not described in detail.

For the multiplexing pattern 1, the CSS #0 may exist in two consecutive slots starting from n0. For an SSB index i, the terminal device may determine n0 in the following manner:

if $\left\lfloor \left(O \cdot 2^{\mu} + \lfloor i \cdot M \rfloor\right) / N_{\text{slot}}^{\text{frame},\mu} \right\rfloor \bmod 2 = 0$, $n_0 = \left(O \cdot 2^{\mu} + \lfloor i \cdot M \rfloor\right) \bmod N_{\text{slot}}^{\text{frame},\mu}$ and is located in an evennumbered frame; or

if $\left\lfloor \left(O \cdot 2^{\mu} + \lfloor i \cdot M \rfloor\right) / N_{\text{slot}}^{\text{frame},\mu} \right\rfloor \bmod 2 = 1$, $n_0 = \left(O \cdot 2^{\mu} + \lfloor i \cdot M \rfloor\right) \bmod N_{\text{slot}}^{\text{frame},\mu}$ and is located in an oddnumbered frame.

$\mu \in \{0, 1, 2, 3\}$ is determined based on a subcarrier spacing of a PDCCH in a CORESET, and values of $\mu$ are 0, 1, 2, and 3, respectively corresponding to subcarrier spacings of 15 kHz, 30 kHz, 60 kHz, and 120 kHz. $N_{slot}^{fram,\mu}$ represents a quantity of slots (slot) in one system frame (frame). In other words, n0 may be determined by using O and M. Optionally, O is used to control a start position of a detection window of a SIB 1 corresponding to the 1st SSB, to avoid a conflict between CSS #0 and an SSB. M is used to control an overlapping status of detection windows of SIBs 1 respectively corresponding to an SSB i and an SSB i+1. For example, if M=2, it indicates that the detection windows do not overlap at all; if M=1, it indicates that the detection windows overlap by one slot; or if M=1/2, it indicates that the detection windows completely overlap. The overlapping represents overlapping in time domain. O and M are indicated by using the foregoing 4 bits. As shown in Table 2, different SSB indexes correspond to different O and M. One of indexes from 0 to 15 is selected by using the 4 bits, and then O and M may be separately determined. Table 2 Parameters for PDCCH monitoring occasions for Type 0-PDCCH search space set-SSB and CORESET multiplexing pattern 1 and FR 1 (Parameters for PDCCH monitoring occasions for Type 0-PDCCH CSS set-SS/PBCH block and CORESET multiplexing pattern 1 and FR 1)

| Index (index) | O | Quantity of search space sets per slot | M | First symbol index |
|---|---|---|---|---|
| 0 | 0 | 1 | 1 | 0 |
| 1 | 0 | 2 | 1/2 | {0, i that is an even number} {N$^{CORESET}_{symb}$, i that is an odd number} |
| 2 | 2 | 1 | 1 | 0 |
| 3 | 2 | 2 | 1/2 | {0, i that is an even number} {N$^{CORESET}_{symb}$, i that is an odd number} |
| 4 | 5 | 1 | 1 | |
| 5 | 5 | 2 | 1/2 | {0, i that is an even number} {N$^{CORESET}_{symb}$, i that is an odd number} |
| 6 | 7 | 1 | 1 | |
| 7 | 7 | 2 | 1/2 | {0, i that is an even number} {N$^{CORESET}_{symb}$, i that is an odd number} |
| 8 | 0 | 1 | 2 | 0 |
| 9 | 5 | 1 | 2 | 0 |
| 10 | 0 | 1 | 1 | 1 |
| 11 | 0 | 1 | 1 | 2 |
| 12 | 2 | 1 | 1 | 1 |
| 13 | 2 | 1 | 1 | 2 |
| 14 | 5 | 1 | 1 | 1 |
| 15 | 5 | 1 | 1 | 2 |

In addition, a beam used to send a SIB 1 is the same as a beam of an SSB corresponding to the SIB 1.

Correspondingly, when the terminal device receives the SIB 1, a used receive beam is the same as a receive beam for receiving the SSB corresponding to the SIB 1.

Alternatively, the SIB 1 may be considered as remaining minimum system information (remaining minimum system information, RMSI), or may be considered as the 1st system message sent after a MIB. Alternatively, the SIB 1 may be considered as a system message including time-frequency resource indication information associated with an RACH. Alternatively, the SIB 1 may be considered as information carried in a PDSCH scheduled by using a PDCCH determined based on a CORESET 0 and CSS 0.

A SIB 1 in LTE includes a parameter used to determine whether a cell is suitable for cell selection, and time domain scheduling information of another SIB. A time domain position of the SIB 1 is fixed (for example, the SIB 1 is carried in a subframe 5, and is transmitted every 20 ms), and a frequency domain position of the SIB 1 may change and is indicated by a corresponding PDCCH.

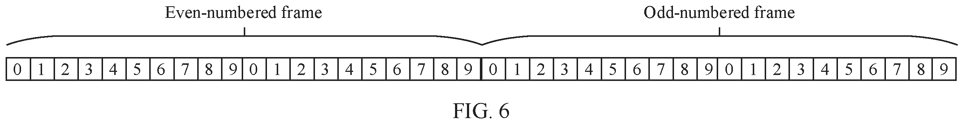

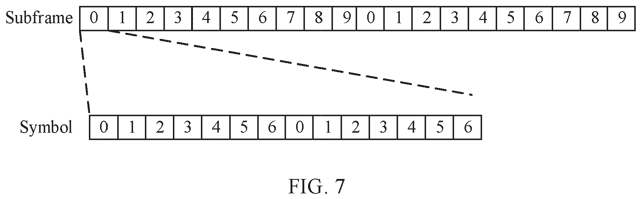

7. Cell-specific reference signal (cell-specific reference signal, CRS): The CRS may be used for all UE in a cell, for example, (1) the CRS may be used by the UE for downlink channel estimation to obtain CSI, (2) measurement based on the cell-specific reference signal may be used for cell selection and handover. The CRS may be carried in each downlink subframe and each RB in an entire downlink bandwidth. The downlink subframe is a variable that describes a length of a time domain unit in an LTE system, and a length of the downlink subframe is 1 ms (millisecond). FIG. 6 is a diagram of a subframe in LTE. In the figure, a length of one frame is 10 ms, and one frame is divided into 10 subframes. A subframe 0 is used as an example. As shown in FIG. 7, in the subframe, CRS occupies four symbols, for example, symbols 0 and symbols 4.

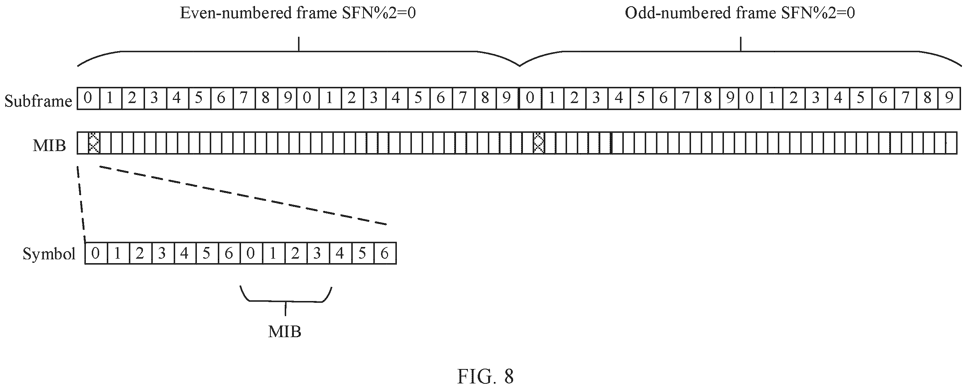

8. PBCH: Similar to that in an NR system, a PBCH in LTE also carries a MIB. A difference lies in that the PBCH in LTE has different specific information content and does not form a block (block) with a PSS and an SSS for transmission. Information mainly included in the MIB in LTE is a downlink system bandwidth, a physical HARQ indicator channel (physical HARQ indicator channel, PHICH) configuration, and a system frame number (system frame number, SFN), and is used by a terminal device to obtain most basic cell configuration information. The PBCH carrying the MIB is located in the first four OFDM symbols of the 2nd slot of a subframe 0 of each system frame in time domain. In LTE, one subframe is divided into two slots, in other words, a length of one slot is 0.5 ms. Specifically, a position of the PBCH is shown in FIG. 8, and the PBCH occupies four symbols 0, 1, 2, and 3.

9. Synchronization signal burst (SS burst)

An SSB is periodically sent. SSBs included in an SSB periodicity may be used as an SSB set, and the SSB set may also be referred to as a synchronization signal burst (SS burst).

To maintain a basic function (for example, synchronization or cell discovery), even if no data is transmitted, a base station needs to frequently send some common signaling. This causes a relatively large waste of power consumption. An LTE system and an NR system are used as an example. In both the LTE system and the NR system, a base station needs to frequently send some common signaling. When LTE and NR share a module (both LTE and NR use same hardware, such as a radio frequency channel), a network device can be shut down only when the network device does not send any message in the LTE system and the NR system. In other words, current configuration of a common signal is not flexible enough, and consequently power consumption of the network device is relatively high.

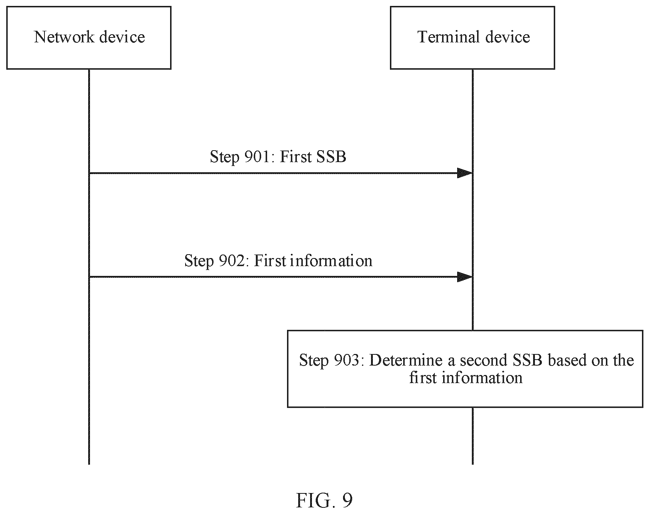

For the foregoing problem, an embodiment of this application provides a communication method, to flexibly configure a communication resource, to reduce power consumption of a network device. As shown in FIG. 9, the method may include the following steps.

Step 901: A network device sends a first SSB to a terminal device, and correspondingly, the terminal device receives the first SSB.

In a possible manner, the network device sends a plurality of SSBs to the terminal device, where the plurality of SSBs include the first SSB. For example, the network device sends N SSBs to the terminal device, where N is a positive integer greater than or equal to 2, and the N SSBs include the first SSB. Optionally, the N SSBs are SSBs of a same cell. In other words, the N SSBs carry a same physical cell identifier PCI. The N SSBs belong to Q sets, and Q is a positive integer greater than or equal to 1. Optionally, each of the Q sets is a synchronization signal burst (SSB burst).

The first SSB may correspond to a pattern (pattern), and the pattern may indicate a candidate time-frequency resource of the first SSB. Alternatively, the pattern may be used to determine the candidate time-frequency resource of the first SSB.

It should be understood that, in this embodiment of this application, the time-frequency resource may be a time domain resource, may be a frequency domain resource, or may be the time domain resource and the frequency domain resource. This is not limited in this embodiment of this application.

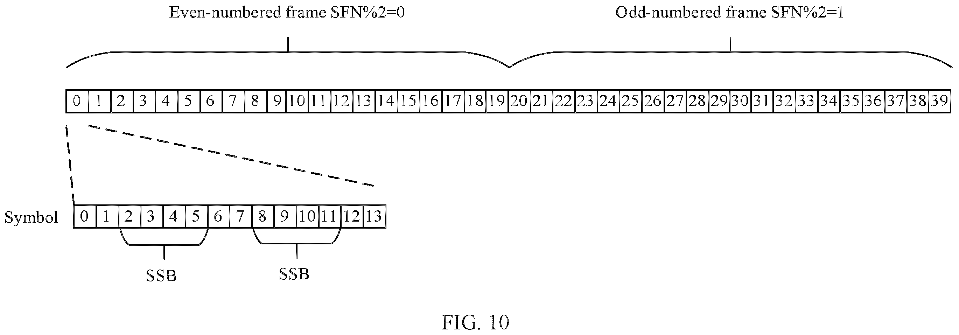

It should be understood that the network device may send the first SSB by using a part of the time-frequency resource, or may send the first SSB by using the entire candidate time-frequency resource. This is not limited in this embodiment of this application. For example, the first SSB corresponds to a first pattern. FIG. 10 shows an example of the first pattern. A candidate resource 0 to a candidate resource 13 included in the first pattern are all used as candidate resources of the first SSB. Resources actually used to send the first SSB are a candidate resource 2 to a candidate resource 5 and a candidate resource 8 to a candidate resource 11. In other words, in this example, a part of the candidate resources are used to send the first SSB. In other words, the pattern may be understood as a candidate resource set, and the terminal device may determine, from the candidate resource set, time-frequency resources associated with the first SSB. For example, the terminal device may perform blind detection on the candidate resource set. Alternatively, the network device may further indicate resources that are in the candidate resource set and that are associated with the first SSB.

Optionally, the terminal device receives the first SSB, and may obtain an index (index) of the SSB and/or an identifier (PCI) of a current cell based on the first SSB.

Step 902: The network device sends first information to the terminal device based on the first SSB, and correspondingly, the terminal device receives the first information based on the first SSB.

In an optional manner, the first SSB is used to determine a time-frequency resource of the first information. For example, the first SSB indicates a time-frequency resource of control information for scheduling the first information, and the terminal device determines the time-frequency resource of the first information based on the specific control information for scheduling the first information.

Specifically, the first information indicates a candidate time-frequency resource of a second SSB. That the second SSB is different from the first SSB may be that the second SSB and the first SSB have different time-frequency domain positions, or may be that the second SSB and the first SSB carry different content. This is not limited in this embodiment of this application. There may be three cases in which the first SSB and the second SSB have different time-frequency domain positions. Case 1: The first SSB and the second SSB have different time domain positions but a same frequency domain position. In other words, the first SSB and the second SSB are based on time division. Case 2: The first SSB and the second SSB have different frequency domain positions but a same time domain position. In other words, the first SSB and the second SSB are based on frequency division. Case 3: The first SSB and the second SSB have different frequency domain positions and different time domain positions. Alternatively, it may be understood, based on at least one of the following, that the first SSB is different from the second SSB: the SSBs have different indexes, PBCHs in the SSBs carry different information, the PBCHs correspond to different DMRSs, the SSBs have different beam directions, or the SSBs include different synchronization signals (PSSs and/or SSSs). Further, different beam directions may indicate that at least one of the following is different: spatial domain information, spatial filter configuration information, a spatial filtering configuration, an antenna directivity pattern used when an SSB is sent, or a spatial filter used when an SSB is sent.

The first information may directly or indirectly indicate the candidate time-frequency resource of the second SSB.

In an example of direct indication, the first information may be position information of the candidate time-frequency resource of the second SSB. For example, content of the first information is position information of a candidate time domain resource of the second SSB and/or position information of a candidate frequency domain resource of the second SSB. There are still two possible manners:

Manner 1: The first information is information about an absolute position of the candidate time-frequency resource of the second SSB. For example, the candidate time domain resource of the second SSB is located in the $2^{nd}$ symbol to the $5^{th}$ symbol of a subframe, and the content of the first information is the $2^{nd}$ symbol to the $5^{th}$ symbol of the subframe. Alternatively, the candidate frequency domain resource of the second SSB is located in the $1^{st}$ RB to the $3^{rd}$ RB of a first frequency domain resource, and the content of the first information is the $1^{st}$ RB to the $3^{rd}$ RB of the first frequency domain resource, for example, may be indexes of the RBs.

Manner 2: The first information is information about a relative position of the candidate time-frequency resource of the second SSB. For example, the first information may be an offset value of a position of the second SSB relative to a position of the first SSB. The offset value of the position of the second SSB relative to the position of the first SSB may be an offset value of a start position of the second SSB relative to a start position of the first SSB, may be an offset value of an end position of the second SSB relative to an end position of the first SSB, or may be an offset value of a predefined position of the second SSB relative to a predefined position of the first SSB. This is not limited in this embodiment of this application. It should be understood that the start position, the end position, and the predefined position may be time domain positions, or may be frequency domain positions.

For example, the first information may be an offset value of a frequency domain position of the second SSB relative to a frequency domain position of the first SSB. The offset value of the frequency domain position of the second SSB relative to the frequency domain position of the first SSB may be an offset value of a frequency domain start position of the second SSB relative to a frequency domain start position of the first SSB, may be an offset value of a frequency domain end position of the second SSB relative to a frequency domain end position of the first SSB, or may be an offset value of a predefined frequency domain position of the second SSB relative to a predefined frequency domain position of the first SSB. This is not limited in this embodiment of this application.

In other words, the first information may indicate an offset value of a time-frequency position of the second SSB relative to a time-frequency position of the first SSB.

In an example of indirect indication, the first information may indicate a second pattern, and the second pattern indicates the candidate time-frequency resource of the second SSB. Alternatively, the pattern may be used to determine the candidate time-frequency resource of the second SSB. A function of the second pattern is similar to that of the first pattern in step 901, and reference may be made to the descriptions in step 901. Details are not described herein. However, distribution of time-frequency resources indicated by the second pattern is different from distribution of time-frequency resources indicated by the first pattern. In other words, distribution of time-frequency resources of the first SSB is different from distribution of time-frequency resources of the second SSB.

Optionally, the second pattern may be a pattern in a pattern set. The pattern set may include a plurality of patterns, and each pattern may indicate the candidate time-frequency resource of the second SSB. However, different patterns in the pattern set correspond to different time domain resources of resources carrying SSBs. For example, the plurality of patterns may include different time-frequency resource positions of SSBs, time-frequency resources indicated by the plurality of patterns carry different quantities of SSBs, or the plurality of patterns correspond to different SSB subcarrier spacings. This is not limited in this embodiment of this application. Specifically, refer to the foregoing descriptions of the SSB pattern A and the SSB pattern B. The patterns in the pattern set herein are similar to the SSB pattern A and the SSB pattern B, and details are not described. In other words, the first information may be used by the terminal device to determine the second pattern from the pattern set.

Optionally, the first information may further indicate a time-frequency resource actually used to send the SSB. In a possible manner, the terminal device may determine a candidate time-frequency resource set based on the pattern, and then determine, from the candidate time-frequency resource set based on the first information, the time-frequency resource actually used to send the SSB. For example, as shown in FIG. 10, the second pattern indicates that candidate time-frequency resources of the second SSB are a candidate resource 0 to a candidate resource 3 and a candidate resource 5 to a candidate resource 8, and the first information indicates that a candidate resource 2 and a candidate resource 7 in the candidate resources are used to send the second SSB. In a possible manner, when the first information indicates the time-frequency resource actually used to send the SSB, the first information may be a bitmap (bitmap). For example, in the pattern shown in FIG. 10, the first information may be 001000010. If a bit value is 0, it indicates that no SSB is sent at the time-frequency position; and if a bit value is 1, it indicates that an SSB is sent at the position. It should be understood that meanings of the foregoing bit values are merely used as an example rather than a limitation. For example, alternatively, if a bit value is 0, it may indicate that an SSB is sent at the time-frequency position; and if a bit value is 1, it may indicate that no SSB is sent at the position. The correspondences between the bit values and the corresponding meanings may be predetermined, or may be indicated. This is not limited in this embodiment of this application.

It may be understood that the first information may indicate position information of the N SSBs. For example, when the first information indicates position information of eight SSBs, the first information may separately or jointly indicate the position information of the eight SSBs. For example, when the first information is a bitmap, and the eight SSBs correspond to four SSB patterns, the first information may be 01001000 10000100 11000000 00011000, in other words, time-frequency positions of the eight SSBs are indicated by 32 bits.

Optionally, the terminal device may determine the time domain position of the second SSB based on the first pattern. For example, a quantity of SSBs included in the second pattern is the same as a quantity of SSBs in the first pattern, and a time domain position of an actually sent SSB in the second pattern is the same as a time domain position of an actually sent SSB in the first pattern. In other words, the terminal device can determine the time domain position of the second SSB based on the first pattern without using other information indicating the time domain position. It should be understood that the frequency domain position of the second SSB may be determined by using indication information, for example, the first information or other information. The indication information indicates the frequency domain position of the second SSB. The terminal device determines the position of the second SSB based on the time domain position and the frequency domain position.

Optionally, the first SSB occupies a first time-frequency resource, and the first time-frequency resource belongs to a candidate time-frequency resource indicated by the first pattern and belongs to the candidate time-frequency resource indicated by the second pattern. In other words, the candidate time-frequency resource of the second SSB may include the candidate time-frequency resource of the first SSB, so that compatibility between different patterns can be improved.

It should be understood that the first SSB may be associated with the first information. Examples are as follows: In a possible manner, the first information is carried in the first SSB. That the terminal device receives the first information based on the first SSB may be that the terminal device parses the first SSB to obtain the first information.

In another possible manner, the first information is carried in a first system message (for example, a SIB 1). The first system message may be determined by using the first SSB. For determining the first system message based on the first SSB, refer to the foregoing method for determining the SIB 1 by using the SSB. Details are not described herein.

Step 903: The terminal device determines the second SSB based on the first information.

The first information directly indicates the time-frequency position of the second SSB:

Corresponding to the manner 1 in step 902, the terminal device receives the first information, and may parse the first information to directly obtain the position information of the candidate time-frequency resource of the second SSB. Corresponding to the manner 2 in step 902, the terminal device receives the first information, and parses the first information to obtain the offset value; and then may determine the position information of the candidate time-frequency resource of the second SSB based on the offset value and position information of the first SSB.

The first information indirectly indicates the time-frequency position of the second SSB:
Corresponding to the indirect indication manner in step 902, the terminal device receives the first information, determines the second pattern based on the first information, and determines the position information of the candidate time-frequency resource of the second SSB based on the second pattern. In a possible manner, that the terminal device determines the second pattern based on the first information may be that the terminal device determines the second pattern from the pattern set based on the first information.

Optionally, when the first information further indicates the time-frequency resource actually used to send the SSB, the terminal device may determine, based on the first information, the time-frequency resource actually carrying the SSB.

The first information indicates time-frequency resource positions of the N SSBs:
The terminal device may further receive other information, for example, information in ssb-PositionsInBurst, to determine a specific position of the SSB. For example, when the first information is 01001000 10000100 11000000 00011000, the terminal device may determine that there are currently four SSB sets (bursts). With reference to information that is in ssb-PositionsInBurst and that indicates that a candidate time-frequency resource of an SSB is represented as 10000100, the terminal device may determine that the SSB is located in the second set.

Alternatively, the terminal device may receive second information, where the second information indicates a group in which an SSB is located; and the terminal device determines a specific position of the SSB, for example, an SSB set to which the SSB belongs, based on the second information.

It should be understood that a quantity of SSBs and a quantity of SSB sets may be predefined, may be indicated, or may be determined based on a periodicity of an SSB set. For example, when a periodicity of an SSB burst is 20 ms, a quantity of SSB bursts is 4; or when a periodicity of an SSB burst is 40 ms, a quantity of SSB bursts is 8. This is not limited in this embodiment of this application.

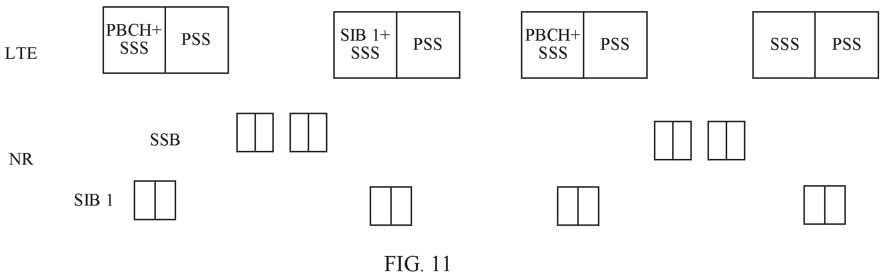

It should be understood that the terminal device further receives a SIB 1. After receiving an SSB, the terminal device may determine DCI based on information carried in a PBCH in the SSB. The DCI is used to schedule a PDSCH carrying the SIB 1. FIG. 11 shows an example of transmission resources of an SSB and a SIB 1 in NR. The figure further includes transmission of a system message in an LTE mode. It may be learned that the SIB 1 in NR and the system message in LTE basically overlap in time-frequency positions. This greatly increases a shutdown possibility of the network device.

In the method, SSBs are flexibly configured by using different patterns (pattern), so that energy consumption of the network device can be reduced, and network access efficiency of the terminal device can be improved. For example, when the SSB or the SIB 1 has a large time-frequency resource overlapping proportion in different communication modes (for example, NR and LTE), an idle state of the network device may be maintained for longer time, in other words, a shutdown probability of the network device is higher. In this way, energy consumption of the network device is reduced.

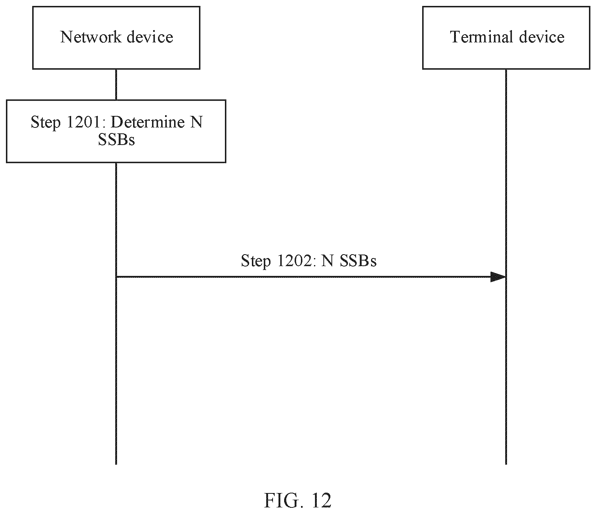

In the foregoing method, time-frequency resource positions of SSBs are redesigned, so that energy consumption of the network device is reduced. An embodiment of this application provides another method, to provide compatibility, effectively reduce energy consumption of a network device, and improve network access efficiency of a terminal device. As shown in FIG. 12, the method includes the following steps.

Step 1201: A network device determines N SSBs.

N is a positive integer greater than or equal to 2.

The N SSBs include an SSB #1 (a first SSB) and an SSB #2 (a second SSB). It should be understood that the first SSB or the second SSB may include a plurality of SSBs, or may include one SSB. An example in which the first SSB or the second SSB includes one SSB is used herein for description.

The SSB #1 is an SSB at a first time domain position in the N SSBs, and the SSB #2 is an SSB at a last time domain position in the N SSBs. A time domain position of an SSB may be represented by a time domain position of a time domain resource occupied by the SSB. The first time domain position may also be understood as a first time domain resource, a first time sequence, an earliest time domain position, or the like. The last time domain position may also be understood as a last time domain resource, a last time sequence, a latest time domain position, or the like.

A time domain interval between the SSB #1 and the SSB #2 is greater than half of a length of a first frame (which may be understood as a length of a half-frame), and the first frame is a frame that carries the N SSBs. The first frame and the half frame are time units. Specifically, an SSB carries a bit, indicating whether the current SSB (and a burst to which the SSB belongs) is located in the first half frame or the second half frame of a frame. The SSB also carries a bit, indicating an index of the frame of the current SSB (and the burst to which the SSB belongs).

The time domain interval between the two SSBs may be represented by an interval between time domain resources respectively occupied by the two SSBs. The time domain interval may be an interval between a start position of a time domain resource occupied by the SSB #1 and a start position of a time domain resource occupied by the SSB #2, may be an interval between an end position of a time domain resource occupied by the SSB #1 and an end position of a time domain resource occupied by the SSB #2, or may be an interval between a predefined position of a time domain resource occupied by the SSB #1 and a predefined position of a time domain resource occupied by the SSB #2. The predefined position may be preset, or may be indicated. This is not limited in this embodiment of this application. For example, when the length of the frame is 10 ms, the time domain interval between the SSB #1 and the SSB #2 is greater than 5 ms.

Optionally, the N SSBs may be determined based on an SSB pattern, and the SSB pattern may indicate time-frequency positions of the N SSBs. For example, one SSB burst may be separately located in two half-frames.

In a possible manner, the N SSBs belong to P sets, P is a positive integer greater than or equal to 2, the P sets are in one-to-one correspondence with P cells, and the P cells are different from each other. The P cells correspond to P cell identifiers PCIs, and the P PCIs are different from each other. In other words, the P sets include two sets: a first set and a second set, the first SSB belongs to the first set, the second SSB belongs to the second set, and the time domain interval between the first SSB and the second SSB is greater than half of the length of the frame.

In a possible implementation, when P is 4, the P sets include a first set, a second set, a third set, and a fourth set; SSB indexes corresponding to SSBs included in the first set and the third set are 2, O is 2, and M is 1; and SSB indexes corresponding to SSBs included in the second set and the fourth set are 4, O is 5, and M is 1. It should be understood that, for a correspondence between the SSB index, O, and M, refer to the descriptions in Table 2. Details are not described herein again. For example, a candidate position of a SIB 1 may be determined based on O and M. Specifically, in a possible manner, O may indicate a start position of a detection window of a SIB 1 corresponding to the first SSB, to avoid a conflict between CSS #0 and an SSB. M may represent an overlapping status of detection windows of SIBs 1 respectively corresponding to an SSB i and an SSB i+1. For example, if M=2, it indicates that the detection windows do not overlap at all; if M=1, it indicates that the detection windows overlap by one slot; or if M=1/2, it indicates that the detection windows completely overlap. Optionally, n0 may be determined by using O and M. For a manner of determining n0 by using O and M, refer to the foregoing descriptions. Details are not described herein again. n0 may be used to determine a position of the CSS 0. For example, the CSS 0 may exist in X consecutive slots starting from n0. X is a positive integer, for example, X = 2. After the position of the CSS 0 is determined, a PDCCH used to schedule the SIB 1 may be detected based on the CSS 0, to determine the candidate position of the SIB 1. For a detailed procedure, refer to the foregoing descriptions. Details are not described herein again. It should be further understood that the SSB indexes corresponding to the first set, the second set, the third set, and the fourth set herein are merely used as a preferred example rather than a limitation. Further, O and M may be further used to determine a time-frequency resource position of the SIB 1.

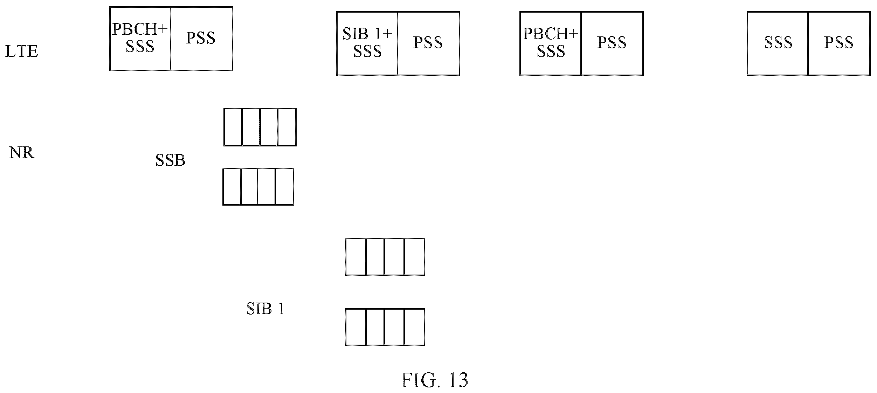

In another possible implementation, the N SSBs include a third SSB and a fourth SSB, the third SSB belongs to a first cell, the fourth SSB belongs to a second cell, and the third SSB and the fourth SSB occupy a same time domain resource but different frequency domain resources. In other words, SSBs belonging to different cells may be transmitted in a frequency division manner. For example, as shown in FIG. 13, SSBs are transmitted in a frequency division manner, and SIBs 1 are also transmitted in a frequency division manner. The figure further includes a diagram of a transmission resource of a system message in LTE. It may be learned that a time-frequency resource occupied by the system message in LTE overlaps a time-frequency resource occupied by the SIB 1 in NR. In this way, a shutdown probability of the network device can be increased. It should be understood that, in the method, LTE and NR are used as an example of different communication modes for solution description, and LTE and NR may overlap in frequency domain. It may be understood that, that LTE and NR overlap in frequency domain may specifically indicate that a band of LTE and a band of NR have overlapping parts. Certainly, LTE and NR may not overlap in frequency domain, and may have two independent bands (band) in a case of nonoverlapping. Alternatively, LTE and NR share a module. That LTE and NR share a module may specifically indicate that LTE and NR use a same hardware device, for example, a power amplifier or a radio frequency channel. Further, that LTE and NR use a same hardware device may specifically indicate that a same hardware device is used when an LTE signal and an NR signal are sent. In a possible implementation, operating bands (operating bands) of LTE and NR are located in an n41 band, and a frequency range of the n41 band is 2496 megahertz (MHz) to 2690 MHz.

In another possible manner, the N SSBs belong to one cell, and a time domain interval between two of the N SSBs is greater than half of a frame. It should be understood that, that the N SSBs belong to one cell may indicate that the N SSBs carry a same PCI.

Step 1202: The network device sends the N SSBs to a terminal device, and correspondingly, the terminal device receives the N SSBs.

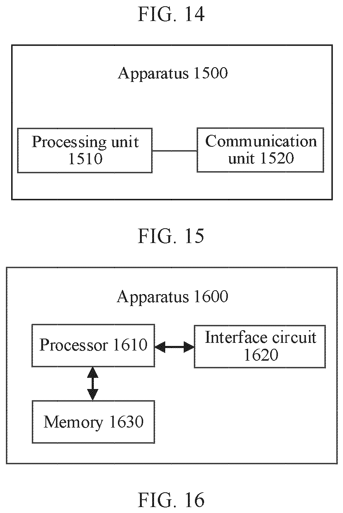

The SSBs are sent in a form of beam (beam) scanning. In the method, it is assumed that a quantity of SSB scanning beams is 8, and a quantity of beams in each cell is 8. As shown in FIG. 14, a quantity of beams in entire space is still 8, so that SSB beams can cover an entire cell range.

Optionally, after receiving the N SSBs, the terminal device may perform a synchronization procedure, a beam selection procedure, or the like with the network device based on the N SSBs. It should be understood that synchronization, beam selection, or the like is merely used as an example rather than a limitation, and the terminal device may alternatively perform another related procedure.

In the method, different cells are obtained through division for the SSBs. In a scenario in which different communication modes coexist without modification of an existing protocol, a shutdown probability of the network device can be increased, power consumption of the network device can be reduced, and network access efficiency of the terminal device can be improved. In addition, the method is applicable to an existing device, thereby improving compatibility and reducing user costs.

It should be understood that, in this embodiment of this application, the network device and the terminal device are used as an example of two-way communication. This is not limited. It should be further understood that, in this embodiment of this application, LTE and NR are used as an example of different communication modes. This is not limited either.

It may be understood that, to implement the functions in the foregoing embodiments, the network device and the terminal device include corresponding hardware structures and/or software modules for performing the functions. Persons skilled in the art should be easily aware that, in this application, the units and the method steps in the examples described with reference to embodiments disclosed in this application can be implemented in a form of hardware or a combination of hardware and computer software. Whether a function is performed by using hardware or hardware driven by computer software depends on particular application scenarios and design constraint conditions of the technical solutions.

FIG. 15 and FIG. 16 are diagrams of structures of possible communication apparatuses according to embodiments of this application. These communication apparatuses may be configured to implement the function of the terminal or the base station in the foregoing method embodiments, and therefore can also achieve beneficial effects of the foregoing method embodiments. In embodiments of this application, the communication apparatus may be one of the terminals 120a to 120j shown in FIG. 1, may be the base station 110a or 110b shown in FIG. 1, or may be a module (for example, a chip) used in the terminal or the base station.

As shown in FIG. 15, a communication apparatus 1500 includes a processing unit 1510 and a transceiver unit 1520. The communication apparatus 1500 is configured to implement the function of the terminal device or the network device in the method embodiment shown in FIG. 9 or FIG. 12.

When the communication apparatus 1500 is configured to implement the function of the terminal device in the method embodiment shown in FIG. 9, the transceiver unit 1520 is configured to receive first information; the transceiver unit 1520 is further configured to receive first information; and the processing unit 1510 is configured to determine a second SSB based on the first information.

When the communication apparatus 1500 is configured to implement the function of the network device in the method embodiment shown in FIG. 9, the transceiver unit 1520 is configured to send a first SSB; the transceiver unit 1520 is further configured to send first information; and the transceiver unit 1520 is further configured to send a second SSB.

When the communication apparatus 1500 is configured to implement the function of the terminal device in the method embodiment shown in FIG. 12, the processing unit 1510 is configured to determine N SSBs; the transceiver unit 1520 is configured to receive the N SSBs; and the processing unit 1510 is further configured to perform synchronization or beam selection with a network device.

When the communication apparatus 1500 is configured to implement the function of the network device in the method embodiment shown in FIG. 12, the transceiver unit 1520 is configured to send N SSBs; and the processing unit 1510 is configured to perform synchronization or beam selection with a terminal device.

For more detailed descriptions of the processing unit 1510 and the transceiver unit 1520, directly refer to the related descriptions of the method embodiment shown in FIG. 9. Details are not described herein again.

As shown in FIG. 16, a communication apparatus 1600 includes a processor 1610 and an interface circuit 1620. The processor 1610 and the interface circuit 1620 are coupled to each other. It may be understood that the interface circuit 1620 may be a transceiver or an input/output interface. Optionally, the communication apparatus 1600 may further include a memory 1630, configured to: store instructions executed by the processor 1610, store input data required by the processor 1610 to run the instructions, or store data generated after the processor 1610 runs the instructions.

When the communication apparatus 1600 is configured to implement the method shown in FIG. 9 or FIG. 12, the processor 1610 is configured to implement the function of the processing unit 1510, and the interface circuit 1620 is configured to implement the function of the transceiver unit 1520.

When the communication apparatus is a chip used in a terminal, the terminal chip implements the function of the terminal in the foregoing method embodiments. The terminal chip receives information from another module (for example, a radio frequency module or an antenna) in the terminal, where the information is sent by a base station to the terminal; or the terminal chip sends information to another module (for example, a radio frequency module or an antenna) in the terminal, where the information is sent by the terminal to a base station.

When the communication apparatus is a module used in a base station, the base station module implements the function of the base station in the foregoing method embodiments. The base station module receives information from another module (for example, a radio frequency module or an antenna) in the base station, where the information is sent by a terminal to the base station; or the base station module sends information to another module (for example, a radio frequency module or an antenna) in the base station, where the information is sent by the base station to a terminal. The base station module herein may be a baseband chip in the base station, or may be a DU or another module. The DU herein may be a DU in an open radio access network (open radio access network, O-RAN) architecture.

It may be understood that, the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any conventional processor.

The method steps in embodiments of this application may be implemented in hardware, or may be implemented in software instructions that may be executed by a processor. The software instructions may include corresponding software modules. The software modules may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. An example storage medium is coupled to the processor, so that the processor can read information from the storage medium and can write information into the storage medium. The storage medium may alternatively be a component of the processor. The processor and the storage medium may be located in an ASIC. In addition, the ASIC may be located in a base station or a terminal. Alternatively, the processor and the storage medium may exist in a base station or a terminal as discrete components.

All or some of the foregoing embodiments may be implemented by using software, hardware, firmware, or any combination thereof. When software is used to implement the foregoing embodiments, all or some of the foregoing embodiments may be implemented in a form of a computer program product. The computer program product includes one or more computer programs or instructions. When the computer programs or instructions are loaded and executed on a computer, all or some of the procedures or functions in embodiments of this application are executed. The computer may be a general-purpose computer, a dedicated computer, a computer network, a network device, user equipment, or another programmable apparatus. The computer programs or instructions may be stored in a computer-readable storage medium, or may be transmitted from a computer-readable storage medium to another computer-readable storage medium. For example, the computer programs or instructions may be transmitted from a website, computer, server, or data center to another website, computer, server, or data center in a wired or wireless manner. The computer-readable storage medium may be any usable medium that can be accessed by a computer, or a data storage device, for example, a server or a data center, integrating one or more usable media. The usable medium may be a magnetic medium, for example, a floppy disk, a hard disk, or a magnetic tape, may be an optical medium, for example, a digital video disc, or may be a semiconductor medium, for example, a solid state disk. The computer-readable storage medium may be a volatile storage medium or a nonvolatile storage medium, or may include two types of storage media: a volatile storage medium and a nonvolatile storage medium.

In embodiments of this application, unless otherwise stated or there is a logic conflict, terms and/or descriptions in different embodiments are consistent and may be mutually referenced, and technical features in different embodiments may be combined based on an internal logical relationship thereof, to form new embodiments.

Depending on whether optional is used in this specification: In this application, "at least one" means one or more, and "a plurality of" means two or more. The term "and/or" describes an association relationship between associated objects and indicates that three relationships may exist. For example, A and/or B may indicate the following cases: Only A exists, both A and B exist, and only B exists, where A and B may be singular or plural. In the text descriptions of this application, the character "/" generally indicates an "or" relationship between the associated objects. In the formula in this application, the character "/" indicates a "division" relationship between the associated objects. The expression "including at least one of A, B, and C" may indicate: including A, including B, including C, including A and B, including A and C, including B and C, and including A, B, and C.

It may be understood that various numbers in embodiments of this application are merely used for differentiation for ease of description, and are not used to limit the scope of embodiments of this application. The sequence numbers of the foregoing processes do not mean execution sequences, and the execution sequences of the processes should be determined based on functions and internal logic of the processes.

**Claims**

1.  A communication method, comprising:

receiving a first synchronization signal block SSB;

receiving first information based on the first SSB, wherein the first information indicates a candidate time-frequency resource of a second SSB; and

determining the second SSB based on the first information.

2. The method according to claim 1, wherein the first SSB corresponds to a first pattern, the second SSB corresponds to a second pattern, and the first pattern is different from the second pattern.

3. The method according to claim 2, wherein that the first information indicates a candidate time-frequency resource of the second SSB comprises:

the first information indicates the second pattern, and the second pattern indicates the candidate time-frequency resource of the second SSB.

4. The method according to claim 2 or 3, wherein the second pattern belongs to a pattern set, and the pattern set comprises at least one candidate pattern.

5. The method according to claim 4, wherein the method further comprises:

receiving second information, wherein the second information indicates a time domain resource that is in the second pattern and that is used to send the second SSB.

6. The method according to claim 1, wherein the first information comprises position information of a time domain resource of the second SSB.

7. The method according to any one of claims 1 to 6, wherein the second SSB belongs to N SSBs, the N SSBs belong to a same cell, the N SSBs belong to Q sets, Q is a positive integer greater than or equal to 1, and the first information further comprises correspondences between the N SSBs and the Q sets.

8. The method according to any one of claims 1 to 7, wherein the first SSB and the second SSB have a same frequency domain position but different time domain positions.

9. The method according to any one of claims 1 to 8, wherein that the first information indicates a candidate time-frequency resource of the second SSB comprises:

the first information indicates an offset value, and the offset value is an offset value of the candidate time-frequency resource of the second SSB relative to a time-frequency resource of the first SSB.

10. The method according to claim 9, wherein the first SSB occupies a first time-frequency resource, and the first time-frequency resource belongs to a candidate time-frequency resource indicated by the first pattern and belongs to the candidate time-frequency resource indicated by the second pattern.

11. A communication method, comprising:

determining N SSBs, wherein N is an integer greater than or equal to 2, the N SSBs comprise a first SSB and a second SSB, the first SSB is an SSB at an earliest time domain position in the N SSBs, the second SSB is an SSB at a latest time domain position in the N SSBs, a time domain interval between the first SSB and the second SSB is greater than half of a length of a first frame, the first frame is a frame that carries the N SSBs, the N SSBs belong to P sets, P is a positive integer greater than or equal to 2, the P sets are in one-to-one correspondence with P cells, and the P cells are different from each other; and

receiving at least one of the N SSBs.

12. The method according to claim 11, wherein when P is 4, the P sets comprise a first set, a second set, a third set, and a fourth set; indexes of SSBs comprised in the first set and the third set are 2, O is 2, and M is 1; and SSB indexes corresponding to SSBs comprised in the second set and the fourth set are 4, O is 5, and M is 1, wherein O and M are used to determine candidate positions of SIBs 1 in the SSBs.

13. The method according to claim 11, wherein the N SSBs comprise a third SSB and a fourth SSB, the third SSB belongs to a first cell, the fourth SSB belongs to a second cell, and the third SSB and the fourth SSB occupy a same time domain resource but different frequency domain resources.

14. A communication method, comprising:

    sending a first SSB; and
    sending first information based on the first SSB, wherein the first information indicates a candidate time-frequency resource of a second SSB.

15. The method according to claim 14, wherein the first SSB corresponds to a first pattern, the second SSB corresponds to a second pattern, and the first pattern is different from the second pattern.

16. The method according to claim 15, wherein that the first information indicates a candidate time-frequency resource of the second SSB comprises:
    the first information indicates the second pattern, and the second pattern indicates the candidate time-frequency resource of the second SSB.

17. The method according to claim 15 or 16, wherein the second pattern belongs to a pattern set, and the pattern set comprises at least one candidate pattern.

18. The method according to claim 17, wherein the method further comprises:
    sending second information, wherein the second information indicates a time domain resource that is in the second pattern and that is used to receive the second SSB.

19. The method according to claim 14, wherein the first information comprises position information of a time domain resource of the second SSB.

20. The method according to any one of claims 14 to 19, wherein the second SSB belongs to N SSBs, the N SSBs belong to a same cell, the N SSBs belong to Q sets, Q is a positive integer greater than or equal to 1, and the first information further comprises correspondences between the N SSBs and the Q sets.

21. The method according to any one of claims 14 to 20, wherein the first SSB and the second SSB have a same frequency domain position but different time domain positions.

22. The method according to any one of claims 14 to 21, wherein that the first information indicates a candidate time-frequency resource of the second SSB comprises:
    the first information indicates an offset value, and the offset value is an offset value of the candidate time-frequency resource of the second SSB relative to a time-frequency resource of the first SSB.

23. The method according to claim 22, wherein the first SSB occupies a first time-frequency resource, and the first time-frequency resource belongs to a candidate time-frequency resource indicated by the first pattern and belongs to the candidate time-frequency resource indicated by the second pattern.

24. A communication method, comprising:

    determining N SSBs, wherein the N SSBs comprise a first SSB and a second SSB, the first SSB is an SSB at an earliest time domain position in the N SSBs, the second SSB is a set at a latest time domain position in the N SSBs, a time domain interval between the first SSB and the second SSB is greater than half of a length of a first frame, the first frame is a frame that carries the N SSBs, the N SSBs belong to P sets, P is a positive integer greater than or equal to 2, the P sets are in one-to-one correspondence with P cells, and the P cells are different from each other; and
    sending the N SSBs.

25. The method according to claim 24, wherein when P is 4, the P sets comprise a first set, a second set, a third set, and a fourth set; indexes of SSBs comprised in the first set and the third set are 2, O is 2, and M is 1; and SSB indexes corresponding to SSBs comprised in the second set and the fourth set are 4, O is 5, and M is 1, wherein O and M are used to determine candidate positions of SIBs 1 in the SSBs.

26. The method according to claim 24, wherein the SSBs comprise a third SSB and a fourth SSB, the third SSB belongs to a first cell, the fourth SSB belongs to a second cell, and the third SSB and the fourth SSB occupy a same time domain resource but different frequency domain resources.

**27.** A communication apparatus, comprising modules configured to perform the method according to any one of claims 1 to 10 or claims 11 to 13.

**28.** A communication apparatus, comprising modules configured to perform the method according to any one of claims 14 to 23 or claims 24 to 26.

**29.** A communication system, comprising the communication apparatus according to claim 27 and the communication apparatus according to claim 28.

**30.** A computer-readable storage medium, wherein the computer-readable storage medium stores computer instructions, and when the computer instructions are run on a computer, the method according to any one of claims 1 to 10, the method according to any one of claims 11 to 13, the method according to any one of claims 14 to 23, or the method according to any one of claims 24 to 26 is performed.

**31.** A computer program product, wherein the computer program product comprises computer program code, and when the computer program code is run on a computer, the method according to any one of claims 1 to 10, the method according to any one of claims 11 to 13, the method according to any one of claims 14 to 23, or the method according to any one of claims 24 to 26 is performed.

FIG. 1

FIG. 2

| 0 | 1 | 2 | 3 | 4 | 5 | 6 | 7 | 8 | 9 | 1 0 | 1 1 | 1 2 | 1 3 | 0 | 1 | 2 | 3 | 4 | 5 | 6 | 7 | 8 | 9 | 1 0 | 1 1 | 1 2 | 1 3 |

Beam 1    Beam 2    Beam 3    Beam 4

(a)

| 0 | 1 | 2 | 3 | 4 | 5 | 6 | 7 | 8 | 9 | 1 0 | 1 1 | 1 2 | 1 3 | 0 | 1 | 2 | 3 | 4 | 5 | 6 | 7 | 8 | 9 | 1 0 | 1 1 | 1 2 | 1 3 | 0 | 1 | 2 | 3 | 4 | 5 | 6 | 7 | 8 | 9 | 1 0 | 1 1 | 1 2 | 1 3 | 0 | 1 | 2 | 3 | 4 | 5 | 6 | 7 | 8 | 9 | 1 0 | 1 1 | 1 2 | 1 3 |

Beam 1    Beam 2    Beam 3    Beam 4    Beam 5    Beam 6    Beam 7    Beam 8

(b)

FIG. 3

| 0 | 1 | 2 | 3 | 4 | 5 | 6 | 7 | 8 | 9 | 10 | 11 | 12 | 13 | 0 | 1 | 2 | 3 | 4 | 5 | 6 | 7 | 8 | 9 | 10 | 11 | 12 | 13 |

Beam 1  Beam 2          Beam 3  Beam 4

(a)

| 0 | 1 | 2 | 3 | 4 | 5 | 6 | 7 | 8 | 9 | 10 | 11 | 12 | 13 | 0 | 1 | 2 | 3 | 4 | 5 | 6 | 7 | 8 | 9 | 10 | 11 | 12 | 13 | 0 | 1 | 2 | 3 | 4 | 5 | 6 | 7 | 8 | 9 | 10 | 11 | 12 | 13 | 0 | 1 | 2 | 3 | 4 | 5 | 6 | 7 | 8 | 9 | 10 | 11 | 12 | 13 |

Beam 1  Beam 2      Beam 3  Beam 4          Beam 5  Beam 6      Beam 7  Beam 8

(b)

FIG. 4

Distance from the absolute frequency
domain position to the CRB S

CORESET 0

CRB S

Offset

SSB

Absolute frequency
domain position

$k_{SSB}$

FIG. 5

Even-numbered frame | Odd-numbered frame

| 0 | 1 | 2 | 3 | 4 | 5 | 6 | 7 | 8 | 9 | 0 | 1 | 2 | 3 | 4 | 5 | 6 | 7 | 8 | 9 | 0 | 1 | 2 | 3 | 4 | 5 | 6 | 7 | 8 | 9 | 0 | 1 | 2 | 3 | 4 | 5 | 6 | 7 | 8 | 9 |

FIG. 6

Subframe | 0 | 1 | 2 | 3 | 4 | 5 | 6 | 7 | 8 | 9 | 0 | 1 | 2 | 3 | 4 | 5 | 6 | 7 | 8 | 9

Symbol | 0 | 1 | 2 | 3 | 4 | 5 | 6 | 0 | 1 | 2 | 3 | 4 | 5 | 6

FIG. 7

FIG. 8

```
┌──────────────────┐                                    ┌──────────────────┐
│  Network device  │                                    │  Terminal device │
└──────────────────┘                                    └──────────────────┘
         │                                                        │
         │                                                        │
         │           Step 901: First SSB                          │
         │───────────────────────────────────────────────────────▶│
         │                                                        │
         │                                                        │
         │         Step 902: First information                    │
         │───────────────────────────────────────────────────────▶│
         │                                                        │
         │                              ┌─────────────────────────┴──────────────┐
         │                              │ Step 903: Determine a second SSB based  │
         │                              │         on the first information        │
         │                              └─────────────────────────┬──────────────┘
         │                                                        │
         │                                                        │
```

FIG. 9

FIG. 10

Even-numbered frame SFN%2=0

Odd-numbered frame SFN%2=1

Symbol

SSB   SSB

EP 4 564 964 A1

LTE

| PBCH+ SSS | PSS |

| SIB 1+ SSS | PSS |

| PBCH+ SSS | PSS |

| SSS | PSS |

NR

SSB

SIB 1

FIG. 11

Network device

Terminal device

Step 1201: Determine N SSBs

Step 1202: N SSBs

FIG. 12

LTE

| PBCH+<br>SSS | PSS |
|---|---|

| SIB 1+<br>SSS | PSS |
|---|---|

| PBCH+<br>SSS | PSS |
|---|---|

| SSS | PSS |
|---|---|

NR

SSB

SIB 1

FIG. 13

FIG. 14

Apparatus 1500

Processing unit
1510

Communication
unit 1520

FIG. 15

Apparatus 1600

Processor 1610

Interface circuit
1620

Memory 1630

FIG. 16

## INTERNATIONAL SEARCH REPORT

| International application No. |
|---|
| **PCT/CN2023/107917** |

| A. | CLASSIFICATION OF SUBJECT MATTER |
|---|---|

H04W 72/04(2023.01)i

According to International Patent Classification (IPC) or to both national classification and IPC

| B. | FIELDS SEARCHED |
|---|---|

Minimum documentation searched (classification system followed by classification symbols)

IPC: H04W, H04B, H04L

Documentation searched other than minimum documentation to the extent that such documents are included in the fields searched

Electronic data base consulted during the international search (name of data base and, where practicable, search terms used)

3GPP, CNABS, CNTXT, DWPI, ENTXTC, WPABS, WPABSC: SSB, 第二SSB, 指示, 半帧, 一帧, 整个帧, 全帧, 对齐, 不同, 小区, indicate, half, frame, different, cell, align

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 114071686 A (HUAWEI TECHNOLOGIES CO., LTD.) 18 February 2022 (2022-02-18) claims 1-22, and description, paragraph [0161] | 1-10, 14-23, 27-31 |
| Y | EP 3780699 A1 (ZTE CORP.) 17 February 2021 (2021-02-17) description, paragraphs [0156]-[0157] | 11-13, 24-31 |
| Y | CN 111989967 A (TELEFONAKTIEBOLAGET LM ERICSSON (PUBL)) 24 November 2020 (2020-11-24) description, paragraph [0055], and figure 6b | 11-13, 24-31 |
| A | KR 20210081904 A (LG ELECTRONICS INC.) 02 July 2021 (2021-07-02) entire document | 1-31 |
| A | CN 114424666 A (HUAWEI TECHNOLOGIES CO., LTD.) 29 April 2022 (2022-04-29) entire document | 1-31 |
| A | ZTE. "Considerations on DL reference signals and channels design for NR-U" *3GPP TSG RAN WG1 Meeting #95, R1-1812433*, 16 November 2018 (2018-11-16), entire document | 1-31 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **13 October 2023** | **19 October 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/107917**

| Patent document cited in search report | | | Publication date (day/month/year) | Patent family member(s) | | | Publication date (day/month/year) |
|---|---|---|---|---|---|---|---|
| CN | 114071686 | A | 18 February 2022 | WO | 2022022610 | A1 | 03 February 2022 |
| EP | 3780699 | A1 | 17 February 2021 | RU | 2747886 | C1 | 17 May 2021 |
| | | | | WO | 2019192536 | A1 | 10 October 2019 |
| | | | | KR | 20200140858 | A | 16 December 2020 |
| | | | | MX | 2020010447 | A | 15 January 2021 |
| | | | | CA | 3095950 | A1 | 10 October 2019 |
| | | | | US | 2021153107 | A1 | 20 May 2021 |
| | | | | CN | 110351740 | A | 18 October 2019 |
| | | | | IN | 202027045730 | A | 12 February 2021 |
| | | | | CN | 113395154 | A | 14 September 2021 |
| CN | 111989967 | A | 24 November 2020 | US | 2019261444 | A1 | 22 August 2019 |
| | | | | ZA | 202005015 | B | 26 January 2022 |
| | | | | WO | 2019158263 | A1 | 22 August 2019 |
| | | | | RU | 2755674 | C1 | 20 September 2021 |
| | | | | JP | 2022095774 | A | 28 June 2022 |
| | | | | JP | 2021520682 | A | 19 August 2021 |
| | | | | EP | 3756397 | A1 | 30 December 2020 |
| | | | | IN | 202047035538 | A | 11 September 2020 |
| KR | 20210081904 | A | 02 July 2021 | None | | | |
| CN | 114424666 | A | 29 April 2022 | WO | 2021056587 | A1 | 01 April 2021 |
| | | | | IN | 202247021886 | A | 06 May 2022 |
| | | | | US | 2022217034 | A1 | 07 July 2022 |
| | | | | EP | 4027738 | A1 | 13 July 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210947916